Europäisches Patentamt

European Patent Office

Office européen des brevets

(11) Publication number: **0 065 349**
**B1**

(12) **EUROPEAN PATENT SPECIFICATION**

(45) Date of publication of patent specification: **04.09.85**

(21) Application number: **82301778.5**

(22) Date of filing: **05.04.82**

(51) Int. Cl.⁴: **H 01 M 2/02,** H 01 M 2/10,
H 01 M 10/00

(54) **Battery container and pack.**

(30) Priority: **11.05.81 US 262133**

(43) Date of publication of application:
**24.11.82 Bulletin 82/47**

(45) Publication of the grant of the patent:
**04.09.85 Bulletin 85/36**

(84) Designated Contracting States:
**DE FR GB**

(56) References cited:
**GB-A-1 537 108**
**GB-A-2 044 983**
**US-A-3 745 048**
**US-A-4 020 244**

(73) Proprietor: **GENERAL MOTORS CORPORATION**
**General Motors Building 3044 West Grand**
**Boulevard**
**Detroit Michigan 48202 (US)**

(72) Inventor: **Jones, Richard Alan**
**1652 Corlettway**
**Anderson Indiana 46011 (US)**
Inventor: **Reoch, William Douglas**
**Route No. 1 Box 39-D**
**Middletown Indiana 47356 (US)**

(74) Representative: **Haines, Arthur Donald et al**
**GM Patent Section Luton Office (F6) P.O. Box**
**No. 3 Kimpton Road**
**Luton, Beds. LU2 OSY (GB)**

Courier Press, Leamington Spa, England.

# Description

This invention relates to packaging exothermic galvanic cells into battery packs and more particularly to a galvanic cell container adapted to be assembled with similar cell containers into lightweight, low volume, structurally stable, and readily coolable battery packs particularly suited to motive-power applications.

Heretofor, individual galvanic cells have been housed in self-supporting containers and packaged together in racks, frames, clips or bands to form batteries. Such packaging permits the number of cells within each battery to be easily changed to accommodate varying power or energy requirements. Many of these packs were heavy, bulky and practically suitable only for stationary applications where size, weight and structural stability were secondary considerations. In most instances, only relatively cool-operating or endothermic cells (e.g. Pb-acid cells) were so packaged and heat management was a relatively simple matter. Cells which are chemically endothermic consume heat on discharge and are said to have thermodynamic efficiencies greater than one (1) based on the ratio of the Gibbs free energy change to the heat of reaction. Heat-wise, the packaging arrangement for endothermic cells need only provide enough cooling to dissipate the battery's Joule heat, which is the heat generated as a result of internal cell resistances and polarizations. In many cases, no particular cooling challenge exists for handling Joule heat.

Packaging designs have been devised for endothermic cells wherein the several cells are spaced apart to provide sufficient cooling to remove the Joule heat, e.g. by ribs which establish a ventilation cooling gap as disclosed for example in US—A—3,745,048. Typically such designs include, thick-walled, self-supporting cell containers, means to hold the individual containers together, and means to prevent some degree of relative movement between the containers. US Patent Number 3 338 452, for example, discloses moulding elongated, vertical, male and female, dovetail interlocks on the end walls of the container. The containers are coupled by vertically sliding one container relative to the next so as to wedge the male and female dovetails together against an internal spline. The interlocks are sized so as to provide an air gap between adjacent cells for cooling thereof. Such arrangements require large interlocks to provide the necessary tensile and compressive strengths to hold the cells tightly without fracturing the interlock, and require sufficiently thick container walls to support the interlocks and contain the components of the cell (i.e. electrolyte, and positive/negative plates) without deformation of the walls. The large elongated interlocks obstruct horizontal air flow between the cells, do not restrict relative movement in the vertical direction, add weight and volume to the cell pack and are susceptible to loosening due to cold flow of the container materials (e.g. synthetic plastics material). Moreover, the thick walls required for this design not only increase the weight of each container, but significantly reduce the rate at which the heat can be transferred therethrough and out of the cell containers. Accordingly, such battery packs are not practical for use in motive-power applications where weight and volume is important, where the pack is subjected to high vibration and shock, and where exceedingly high Joule heats are common place.

A variety of high energy batteries have been proposed for motive-power applications in electric vehicles. Many such batteries employ electrochemical systems which are exothermic on discharge. In this regard, exothermic cells have reactants which generate chemical heat during discharge and are said to have thermodynamic efficiencies less than one (1). Some exothermic cells give off more chemical heat than others. The amount of heat given off from a particular pair of reactants (i.e. a "cell couple") corresponds to the difference between the free energy of reaction and the heat of reaction, and the greater this difference the more chemical heat a cell will generate. Among the ambient temperature, aqueous electrolyte cells, alkaline Ni—Zn and alkaline Ni—Fe cells are considered to be in the highly exothermic category giving off a calculated heat in excess of 8368 Joules (2000 calories) per electrochemical equivalent. Motive-power applications place severe current demands on batteries made from such cells by generating considerable Joule heat in addition to the chemical heat evolved on discharge. In this regard, a computer simulation of a typical electrically propelled automobile (EPA) driving schedule shows that the batteries must deliver more than 55 amperes for fifty (50) percent of the time, more than 75 amperes for thirty-three (33) percent of the time, over 120 amperes for sixteen (16) percent of the time and over 150 amperes for eight (8) percent of the time with occasional loads up to 350 amperes. Under such conditions the additive Joule and chemical heats are significant and, if uncontrolled, can destroy the Ni—Zn and Ni—Fe cells. In this latter regard and by way of example, alkaline Ni—Zn motive-power battery packs can generate enough heat in an adiabatic, high rate discharge to actually boil the electrolyte if uncontrolled. Even at lower discharge rates, sufficient heat can be generated to increase the cell temperature to levels which accelerate component decomposition and lead to ultimate failure of the batteries.

For motive-power batteries a number of cells must be packed closely together to provide the requisite voltage, power and energy. These battery packs must: consume as little space as possible to ensure adequate passenger and luggage capacity; be as light as possible so as not to waste energy in carrying its own weight; and must be dimensionally stable, such that the individual cell containers will not move relative to each other. Finally, the pack itself must be strong enough to resist deformation and damage due to stresses developed internally of the cell pack as well as stresses such as vibration and shock loading developed externally of the cell pack and typically found in vehicle use. With all these constraints, motive-power battery packs still must also be designed for maximum cooling to dissipate the combined chemical and Joule heats.

Plastics, and particularly injection moulded thermoplastics, are presently considered the most commercially practical and economical way to make battery containers. Plastics, however, tend to have relatively low thermal conductivities. The thicker they are the more they resist heat flow therethrough and vice versa. In this regard, it has been demonstrated that adequate heat can be removed from within a high energy Ni—Zn battery under high rate discharge conditions if the end walls of the plastics containers of the cells: (1) are sufficiently thin to rapidly transmit heat from within the cells; and (2) have a large unobstructed surface area exposed to a cooling air current for rapidly dissipating the heat flowing through the walls. However, the thinness required for effective heat transfer leaves the walls so weak that they cannot independently withstand deformation (e.g. bulging) resulting from the forces developed within the cells during a high rate discharge of the battery. Nickel-zinc cells, for example, often develop internal forces in excess of 448.22N (one hundred (100) pounds) and sometimes as high as 896.44N (two hundred (200) pounds). These internal forces pressing on the container walls, coupled with the elevated operating temperatures typically seen with such cells, will deform plastic cell walls made thin enough for effective heat transfer. In this regard, without support the entire wall can bulge or bow outwardly and, if allowed to occur: (1) can change the relationship between the electrolyte and the other cell elements and thereby affect individual cell performance; and (2) close off or restrict any ventilation cooling spaces or gaps provided between the cells. Such restriction of the intercell cooling gaps reduces effective cooling, causing the individual cell temperatures to rise, which, in turn, causes even more container wall deformation. This cycle repeats until the cell pack is destroyed.

A motive-power battery pack according to the present invention comprises a plurality of discrete, plastics, galvanic cell containers secured together along a common axis to resist axial expansion, said containers each being defined by parallel planar end walls and housing an exothermic cell couple, at least one of said walls abutting a juxtaposed wall of an adjacent, like container in the pack, said walls having spacer means which form a ventilation cooling gap, and is characterised in that: (a) said end walls are heat transmissive and of a thickness insufficient independently to resist bulging due to forces developed by said couple within said container during charge-discharge cycling of said pack; (b) a plurality of integral, heat transmissive bosses are distributed substantially uniformly across the external face of said one wall to form said ventilation cooling gap between the abutting juxtaposed walls, the size, number and proximity of said bosses being such that when they abut against the juxtaposed wall or bosses of said adjacent container they provide mutual support therebetween so as to prevent bulging of the juxtaposed walls as well as maintain the integrity of said gap against the forces generated during said cycling; and (c) the containers have registering interlocks for preventing relative displacement of said containers.

The present invention comprehends a readily coolable, motive-power battery pack comprising a plurality of exothermic galvanic cells each in its own individual container and all stacked and clamped (e.g. banded) together in end-to-end and mutually-supporting relation one to the other. Each container is formed from a plastics material and structured with thin end walls to permit maximum heat transmission therethrough. The end walls are so thin as not to have enough strength to independently resist growth distortion (i.e. massive bowing or bulging) thereof due to forces developed within the container during the normal cycling operation (i.e. charge/discharge) of the battery. The several containers are spaced apart in the pack to provide a ventilation gap therebetween for the free and uninhibited flow of cooling air. None-the-less the containers contact one another at a plurality of small sites between adjacent containers to provide mutual support to each other. In this regard, the thin distortable end walls each include a plurality of small, closely spaced, reinforcing bosses moulded integral therewith and distributed substantially uniformly across the external faces of the walls. The bosses extend from the wall of one container into the ventilation gap between adjacent containers and engage the wall of the next adjacent container in the pack. Appropriate means hold the several containers together in a rigid assembly resistant to axial growth. Such means may comprise part of the cell pack itself as for example tension bands, or may comprise part of the structure of the electric vehicle (e.g. a battery tray). When thusly assembled, the several bosses serve to transmit the internal forces tending to bulge the walls of one container across the gap to the juxtaposed wall of the next adjacent container and vice versa. The net effect is to counter-balance the internal, wall-distorting forces of each cell with substantially the equivalent wall-distorting forces of the other cells in the pack and thereby effectively negate any gross distortion (e.g. bulging) of the end walls of any of the containers in the pack. Many bosses on the faces of the end walls serve to substantially equally distribute the wall-distorting forces over the face of each wall and across the gap. Such distortion, if not checked, would otherwise disturb the relationship of the cell elements within the container, reduce the size of the ventilation gap and restrict the flow of cooling air between the containers which in turn would ultimately lead to overheating and destruction of the pack.

The reinforcing bosses extending between adjacent containers are preferably so small and so spaced as not to significantly impede heat transfer through the wall or air flow through the gap. Many small closely-spaced bosses permit the use of thinner container walls than fewer, larger, wider-spaced bosses would permit. If the bosses are spaced too far apart, localized distortion or bulging can occur between the bosses. A greater number of small bosses also serves to extend the heat transfer surface area of the external face of the wall and thereby promote somewhat more efficient cooling. On the other hand, if the bosses are too many and too close together, air-flow between the containers is restricted and cooling reduced. Hence, a reasonable compromise between wall thickness and boss size and spacing must be reached and will often be dictated by the physical properties of the particular plastics material selected. Finally, the use of small bosses distributed uniformly across the external faces of the container walls permits air to flow substantially unrestricted both horizontally and vertically between the containers. This prevents the channeling of air, dead spots in the air flow, hot spots on the container walls and generally promotes better cooling and more flexibility in locating the battery pack in a vehicle without impeding air flow.

In a preferred embodiment of the invention, the reinforcing bosses on each container wall project only halfway into the ventilation gap between the containers and engage the tips of the bosses projecting from the next adjacent container walls. Together the engaging bosses perform the same function as longer bosses on one container extending completely across the gap to the other wall. The preferred design results in a universal container which can be positioned anywhere in the pack without interfering with adjacent containers, and permits the cost-effective use of a single mould for moulding all of the containers. In addition to reducing the number and cost of moulds, this design reduces the number of separate parts required to be handled during assembly and eliminates any container orientation step that might otherwise be required during pack assembly.

Another feature of the present invention involves the provision of registering interlocks on the end walls of the container. The interlocks serve to accurately align the containers during stacking and thereafter to prevent displacement of the containers, one with respect to the other in all radial and rotational directions relative to the central axis of the stack and parallel to the end walls. Such interlocks comprise at least one set of small, complementary shaped (e.g. male and female) projections on the juxtaposed walls of adjacent containers. The projections nest, one within the other, as the containers are butted together while stacking the containers in the direction of the central longitudinal axis of the pack. Preferably several such sets are used so as to keep the mass and volume of each projection low for heat transfer purposes but without compromising the strength required to resist relative displacement of the containers during rough handling and severe service use of the pack. The small projections also permit substantially unobstructed vertical and horizontal air flow between the several cells without creating any "dead air" spots in the air flow pattern between the containers and corresponding "hot spots" on the container end walls. The complementary male and female projections are so positioned on each wall that when all of the containers are moulded exactly the same they can be located anywhere in the pack and still have their projections mate with the complementary projections on the adjacent container walls.

Preferably the containers are secured together by thin, ribbon-like tensioning bands or straps which clamp the containers tightly together, so as to restrain axial growth. Such thin bands or straps consume little space in the battery compartment, add little weight to the pack and are readily removed and replaced should a cell need to be removed from the pack for servicing or replacement. As the tensioning straps/bands apply considerable axial force to the stack, the outside end walls of the terminal containers must be appropriately reinforced without substantially reducing their effectiveness in conducting heat from the cell. In one embodiment, reinforcing terminal plates spaced from the end walls are used. In a preferred embodiment, the outside walls of the terminal cells are reinforced with ribbing.

The present invention may better be understood when considered in the light of the detailed description of specific embodiments thereof which is made hereafter in conjunction with the accompanying drawings, in which:

Figure 1 is a perspective view of a battery pack assembled in accordance with the present invention;

Figure 2 is a section view of the battery pack of Figure 1 taken in the direction 2—2 of Figure 1 and Figure 3;

Figure 3 is a side, sectional view of a portion of a battery pack taken in the direction 3—3 of Figure 2;

Figure 4 is a front elevational view of the end wall of one of the cell pack containers;

Figure 5 is a bottom view of one of the containers of the cell pack taken in direction 5—5 of Figure 4;

Figures 6 and 7 are partial front elevational views of container end walls illustrating other embodiments of container interlocks;

Figure 8 is an exploded perspective view illustrating stacking of the containers in the direction of the center axis of the pack.

For the most part the same numbering is used throughout the various figures.

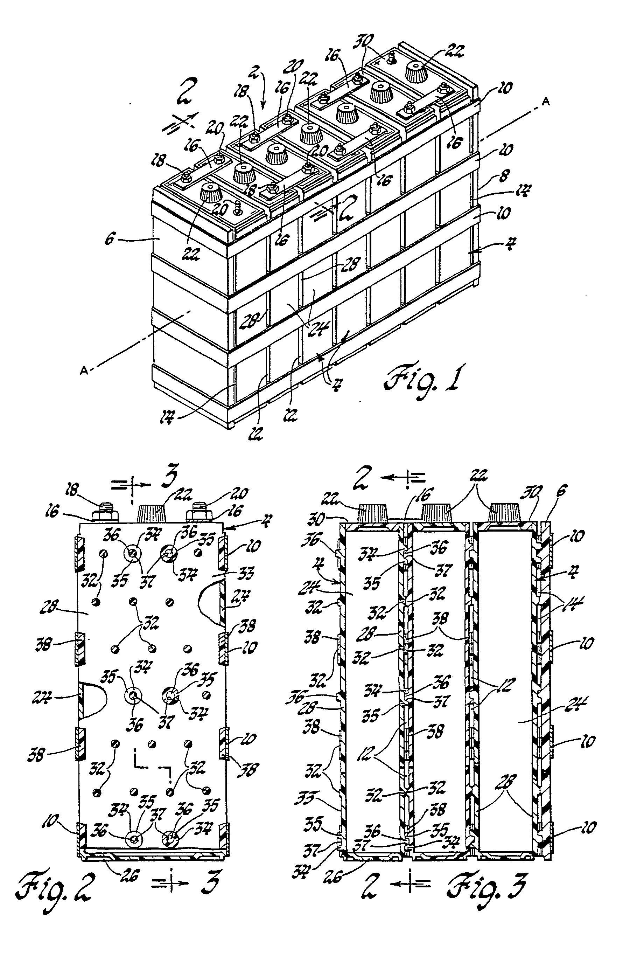

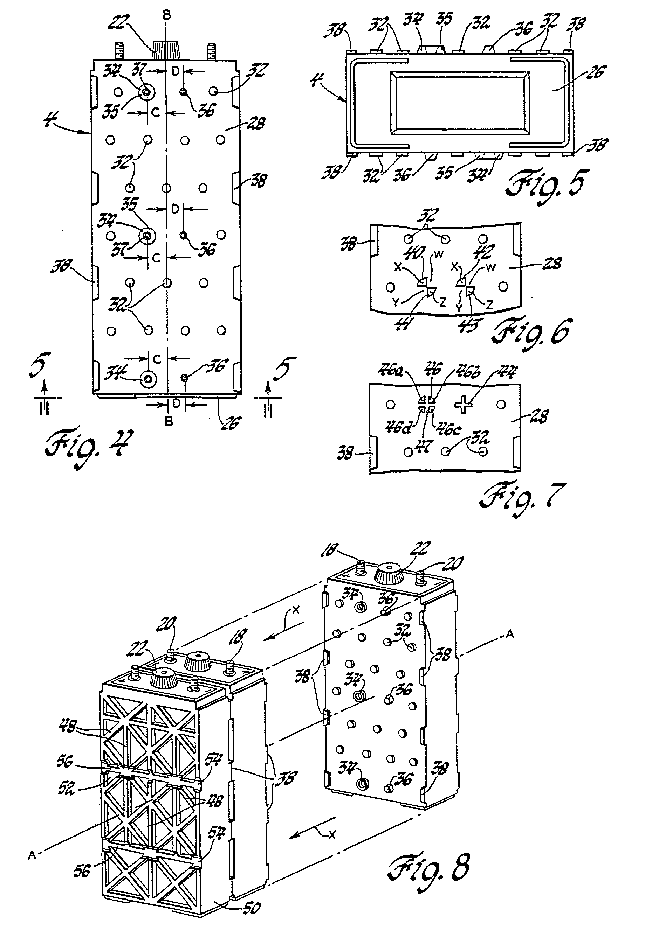

Figures 1—5 illustrate a cell pack and individual containers therefor made in accordance with the present invention. A cell pack 2 comprises a plurality of individual cell containers 4 compressed tightly together between end plates 6 and 8 by means of a plurality of wrapping straps 10. As best shown in Figure 3, the pack-sides of the end plates 6 and 8 have the same configuration of bosses and projections as the end walls of each container to ensure cooling for the terminal containers as well as to avoid shifting of the end plates relative to the containers. The straps 10 may comprise virtually any material (e.g. steel, or fibreglass) which has sufficient strength to withstand the accumulated forces from within the packs which tend to distort or bulge the individual cells during cycling operation thereof.

During assembly, the several containers 4 are stacked end-to-end and face-to-face in the direction of the longitudinal center axis A of the pack (see Figure 8). When fully assembled, the several containers 4 are spaced one from the other by an intercell gap 12 and from the end plates 6 and 8 by a gap 14. The gaps 12 and 14 permit cooling air to circulate between the containers 4 to remove heat emitted therefrom during cycling. Intercell connectors 16 electrically interconnect the several cells in series by joining the positive terminals 18 with the negative terminals 20 of the next adjacent cells. Similarly, a parallel connected battery pack would involve merely rotating every other cell from the position shown in Figure 1 such that all of the positive terminals 18 are aligned along one side of the pack and all the negative terminals 20 along the other side, and then connecting all the positive terminals 18 and negative terminals 20 respectively together. Filler and vent caps 22 are provided on top of each container 4 for filling the container 4 with electrolyte and for venting any excess gas pressure developed within the container.

Figures 2 and 3 are sectioned views of the battery pack of Figure 1 and best depict the reinforcing bosses and preferred interlock features of the invention. The individual containers 4 each comprise an injection moulded plastics housing comprising side walls 24, bottom wall 26 and end walls 28. These end walls 28 are inward of the cell pack and serve as heat emitters for the containers. A separate cover member 30 closes off the top of the container 4. A plurality of small, discrete bosses 32 are integrally moulded on the external faces 33 of the end walls 28. As best illustrated in Figure 3, the various bosses 32 meet in the center of the ventilation gap 12, and serve to distribute the internally developed forces more uniformly across the total area of the walls 28 and to transmit those forces to the walls of the next adjacent container 4 in the pack. The walls 28 also include at least one set of interlocking complementary male 36 and female 34 projections. These projections 34, 36 nest, one within the other, when the several containers 4 are stacked together in the direction of axis A. The female projection 34 comprises an annular ridge 35 of plastics material which defines a central opening 37 for receiving the male projection 36. This mating of the projections 34 and 36 serves two functions. First, the nesting of the projections during stacking precisely aligns the several containers with respect to each other. Second, once stacked and secured together the annular ridge 35 of the female projection 34 completely surrounds the male projection 36 and prevents movement of any one container 4 with respect to any other container in any direction radial to the longitudinal center axis A and in planes parallel to the planes of the end walls 28. The end plates 6 and 8 have the same pattern of bosses 32 and projections 34 and 36 as do the container end walls 28 for appropriate alignment and retention with the end walls 28 of the end containers in the cell pack 2. A plurality of compression blocks 38 are moulded integral with the end walls 28 at their junction with the side walls 24. The blocks 38 are located beneath the tension straps 10 and serve to prevent deformation or breakage of the several containers 4 at the side walls 24 incident to tightening of the straps 10 during assembly.

Figures 4 and 5 best illustrate an end wall pattern of reinforcing bosses 32 and interlocking projections 34, 36, particularly suitable for moulding a universal container. By universal container is meant one which is the same as all the other containers and which can be positioned anywhere within the pack 2, or even rotated within the pack about its own vertical axis (i.e. to permit series of parallel joining of the cells), and still mate with containers on either side of it or with the end plates 6 and 8. Such containers require only a single mould to make and simplify the pack assembly operation. With a universal container the only controls required during assembly are those necessary to ensure proper orientation of the terminals 18 and 20 to provide the correct arrangement of cells for series or parallel connections. To ensure that every universal container will mate with the other, the interlocking projections 34 and 36 are equispaced from the vertical center line $B$ of the container wall 28. Hence, the female projections 34 are spaced a distance $C$ from the vertical center line $B$ and the male projections 36 spaced a distance $D$ from the vertical center line $B$. When distance $C$ equals the distance $D$, all end walls of all containers will mate with like containers regardless of the position or orientation of each in the stack 2.

Figures 6—7 show portions of container end walls 28 with modified mating male and female interlocks. Figure 6 shows pre-shaped projections 40, 41, 42 and 43. Projections 40 and 41 comprise opposing quadrants in the X and Z quadrant positions of a circle. Similarly projections 42 and 43 likewise comprise opposing quadrants in the X and Z quadrant positions of a circle. When positioned face-to-face with an identically moulded container in a stack, the projections 42 and 43 will lay within the W and Y quadrant vacancies between projections 40 and 41 on the next adjacent container wall and thereby prevent container displacement in any direction. In Figure 7, the projection set includes a cross-shaped male projection 44 and female projection 46. The female projection 46 comprises the projecting pie-shaped segments 46a, 46b, 46c and 46d which define a cross-shaped hollow 47 therebetween for receiving the cross 44. This design likewise prevents relative container displacement in any direction.

Figure 8 illustrates another embodiment of the present invention as well as the way the containers are stacked together in the direction X of the longitudinal center axis A. When so stacked the interlocking projections mate and guide the several containers into perfect alignment for final banding. The Figure 8 embodiment eliminates the need for separate end plates and, in their stead, uses reinforcing ribs 48 moulded into and crisscrossing the outer end walls 52 of the end containers 50. Reinforcing the outer end walls 52 of the end containers 50 conserves space and reduces the finished weight of the pack. The number and size of the ribs 48 are chosen so as to provide adequate strength, but without interfering with the heat transfer through the end walls 52. Cutouts 54 are provided through horizontal ribs 56 to accommodate the wrapping straps. In this particular embodiment only two straps are used to secure the containers together.

By way of example, a nickel-zinc motive-power battery for a 1587.6 kg (3500 lb) vehicle could contain ten (10) cells packs having fifteen (15) cells and about 21600 watt-hrs per pack. Each cell is housed in an injection moulded container comprising phenylene oxide (i.e. NORYL P X 1683; trademark of General Electric of U.S.A.). The container is about 263 mm high, about 115 mm wide and has an opening of about 44.3 mm between its end walls for receiving the cell elements. The end walls are about 2.9 mm thick and have 18 spacing bosses distributed substantially uniformly thereon (i.e. see Figure 4). The bosses have a diameter of about 6.4 mm and project out from the face of the wall a distance of about 1.5 mm, the same height as the compression blocks. Each wall includes three sets of male and female interlocking projections (see Figure 4). The annular ridge defining the female projection has an inside diameter of about 7.2 mm (at the mouth), an outside diameter of about 13 mm and stands about 3.0 mm out from the wall. The cavity in the female projection slopes inwardly at an angle of about 20° to a depth equal to the height of the ridge above the wall (i.e. 3.0 mm). The male projection is about 6.4 mm diameter at its base and slopes upwardly at an angle of about 20° (i.e. same as female cavity) to an elevation of about 2.7 mm out from the wall.

Under mild driving and moderate ambient temperature conditions, batteries made in accordance with this invention may be cooled by natural convection alone, but must be allowed to stand and cool for some time before charging can commence without damaging the battery. Accordingly, and as a practical matter the vehicle design should include a blower or forced draught means to force-cool the batteries under severe driving conditions, high ambient temperatures and where recharge immediately following discharge is the norm. In this regard, the blower should have sufficient capacity to keep the batteries below about 66°C (150°F) (preferably below about 60°C (140°F)) during discharge. These batteries have been successfully cooled with ambient-air flowing at rates between about 0.028 cubic metres per minute (1 CFM) and 0.084 cubic metres per minute (3 CFM) through each gap 12 between the containers.

Accordingly, the present invention provides a lightweight, low volume, structurally stable, ventilated, motive-power battery pack for exothermic galvanic cells, which pack comprises a plurality of mutually-supporting, thin-walled, plastic cell containers according to the present invention, interlocked one with the other against relative displacement and clamped together against distortion from internally generated and externally applied forces.

A preferred embodiment of the present invention provides such a pack having interlocking means which facilitate alignment of the containers during assembly of the pack and which prevent relative displacement of the containers in all directions parallel to the container end walls and radial or rotational to the longitudinal center axis of the pack.

A preferred feature of this preferred embodiment of the present invention provides an economical, universal cell container for use in such a pack, which container may be located in any position or orientation within the pack and still have interlocking compatibility with adjacent containers on either side thereof.

While this invention has been disclosed primarily in terms of specific embodiments thereof it is not intended to be restricted thereto but rather only to the extent set forth hereafter in the claims which follow.

## Claims

1. A motive-power battery pack (2) comprising a plurality of discrete, plastics, galvanic cell containers secured together along a common axis to resist axial expansion, said containers each being defined by parallel planar end walls (28) and housing an exothermic cell couple, at least one of said walls abutting a juxtaposed wall of an adjacent, like container in the pack, said walls having spacer means which form a ventilation cooling gap, characterised in that: (a) said end walls are heat transmissive and of a thickness insufficient independently to resist bulging due to forces developed by said couple within said container during charge-discharge cycling of said pack; (b) a plurality of integral, heat transmissive bosses (32) are distributed substantially uniformly across the external face (33) of said one wall (28) to form said ventilation cooling gap (12) between the abutting juxtaposed walls, the size, number and proximity of said bosses being such that when they abut against the juxtaposed wall or bosses of said adjacent container they provide mutual support therebetween so as to prevent bulging of the juxtaposed walls as well as maintain the integrity of said gap against the forces generated during said cycling; and (c) the containers have registering interlocks for preventing relative displacement of said containers.

2. A motive-power battery pack (2) according to claim 1, characterised in that the bosses (32) on said one of said juxtaposed walls (28) abut bosses (32) on the other of said juxtaposed walls (28) in said gap (12).

3. A motive-power battery pack (2) according to claim 1 or 2, characterised in that there is, between each pair of juxtaposed walls (28), a male projection (36) on one of said juxtaposed walls (28), and a complementary female projection (34) on the other of said juxtaposed walls (28); said male and female projections (36, 34) being adapted to nest one within the other for preventing displacement of said containers (4) relative to each other while said containers (4) are secured together in said pack (2).

4. A motive-power battery pack (2) according to claim 2 or 3, characterised in that there is, between each pair of juxtaposed walls (28), a first set of male and female projections (36, 34) on one of said juxtaposed walls (28); and a complementary second set of male and female projections (36, 34) on the other of said juxtaposed walls (28); said sets being adapted to mate with each other such that the male projection (36) from each set nests in the complementary female projection (34) of the other set and together prevent displacement of said containers (4) relative to each other in all radial and rotational directions relative to said axis (A) while said containers (4) are secured together in said pack (2).

5. A motive-power battery pack (2) according to claim 4, characterised in that said projections (36, 34) and bosses (32) for each container (4) are so positioned on the corresponding walls (28) that each container (4) is interchangeable with any other container (4) such as to be positionable anywhere in said pack (2) and still maintain boss-to-boss abutment and male-to-female projection nesting.

6. A motive-power battery pack (2) according to any one of the preceding claims 2 to 5, characterised in that the pack (2) contains end containers (50) at opposite ends of said pack (2), said end containers (50) each housing an exothermic galvanic cell couple and having said distortable, heat-transmissive wall (28) on the one end thereof inward of the pack (2), and said end containers (50) each further being defined by an outer wall (52) at the terminus of the pack (2) for engaging said securing means (10), said outer wall (52) having an external face including a plurality of integral criss-crossing ribs (48, 56) for reinforcing said wall (52) against distortion and distributing the force of said securing means (10) substantially evenly across the ends of the pack (2).

**Patentansprüche**

1. Eine Antriebsleistungs-Batteriepackung (2) aus einer Vielzahl von diskreten Kunststoffbehältern für galvanische Zellen, die längs einer gemeinsamen Achse aneinander befestigt sind, um axialer Dehnung zu widerstehen, wobei die Behälter jeweils durch parallele ebene Endwände (28) bestimmt sind und ein exothermisches Zellenpaar aufnehmen, mindestens eine der Wände an einer naheliegenden Wand eines benachbarten gleichen Behälters in der Packung anstößt und die Wände Abstandsmittel besitzen, die einen Ventilations-Kühlspalt bilden, dadurch gekennzeichnet, daß:

a) die Endwände wärmedurchlässig und von einer Stärke sind, die nicht ausreicht, einem Verbeulen in Folge von durch das Paar innerhalb des Behälters während des Lade/Entladedurchlaufes der Packung entwickelten Kräften unabhängig zu widerstehen;

b) eine Vielzahl von integralen, wärmedurchlässigen Klötzen (32) im wesentlichen gleichmäßig über die Außenfläche (33) der einen Wand (28) verteilt ist, um den Ventilations-Kühlspalt (12) zwischen aneinanderstoßenden naheliegenden Wänden zu bilden, wobei die Größe, Anzahl und Nachbarschaft der Klötze so ist, daß, wenn diese gegen die naheliegende Wand oder Klötze des benachbarten Behälters anstoßen, gegenseitige Abstützung zueinander schaffen, um so Ausbeulen der naheliegenden Wände zu verhindern, wie auch die Vollständigkeit des Spaltes aufrecht zu erhalten gegen die während des Durchlaufes erzeugten Kräfte; und

c) die Behälter miteinander ausgerichtete gegenseitige Paßteile besitzen, um Relativversetzung der Behälter gegeneinander zu verhindern.

2. Eine Antriebsleistungs-Batteriepackung (2) nach Anspruch 1, dadurch gekennzeichnet, daß die Klötze (32) der einen der einander naheliegenden Wände (28) an Klötzen (32) der anderen der einander naheliegenden Wände (28) in dem Spalt (12) anstoßen.

3. Eine Antriebsleistungs-Batteriepackung (2) nach Anspruch 1 oder 2, dadurch gekennzeichnet, daß zwischen jedem Paar einander naheliegender Wände (28) ein Stößelfortsatz (36) an einer der einander naheliegenden Wände (28) und ein komplementärer umfassender Fortsatz (34) an der anderen der einander naheliegenden Wände (28) vorhanden ist; daß die Stößel- und umfassenden Fortsätze (36, 34) zum Einsitzen des einen in den anderen ausgelegt sind, um ein Versetzen der Behälter (4) relativ zueinander zu verhindern, während die Behälter (4) miteinander in der Packung (2) sicher verbunden sind.

4. Eine Antriebsleistungs-Batteriepackung (2) nach Anspruch 2 oder 3, dadurch gekennzeichnet, daß zwischen jedem Paar von einander naheliegenden Wänden (28) eine erste Gruppe von Stößel- und umschließenden Fortsätzen (36, 34) an einer der einander naheliegenden Wände (28) vorhanden ist und eine komplementäre zweite Gruppe von Stößel- und umschließenden Fortsätzen (36, 34) an der anderen der einander naheliegenden Wände (28); daß die Gruppen ausgelegt sind, miteinander so zu passen, daß der Stößelfortsatz (36) aus jeder Gruppe in dem komplementären umschließenden Fortsatz (34) der anderen Gruppe einpaßt und sie zusammen ein Versetzen der Behälter (4) relativ zueinander in allen Radial- und Rotations-Richtungen relativ zu der Achse (A) verhindern, während die Behälter (4) in der Packung (2) zusammen sicher verbunden sind.

5. Eine Antriebsleistungs-Batteriepackung (2) nach Anspruch 4, dadurch gekennzeichnet, daß die Fortsätze (36, 34) und Klötze (32) für jeden Behälter (4) so an den entsprechenden Wänden (28) angeordnet sind, daß jeder Behälter (4) mit irgendeinem anderen Behälter (4) austauschbar ist, um so irgendwo in der Packung (2) einsetzbar zu sein und dennoch das Aneinanderstoßen von Klotz zu Klotz und das Einpassen von Stößel- zu umschließendem Fortsatz aufrecht zu erhalten.

6. Eine Antriebsleistungs-Batteriepackung (2) nach einem der vorangehenden Ansprüche 2 bis 5, dadurch gekennzeichnet, daß die Packung (2) an entgegengesetzten Enden der Packung (2) Endbehälter (50) enthält, daß die Endbehälter (50) jedes Gehäuses ein exothermisches galvanisches Zellenpaar aufnehmen und die verformbare, wärmedurchlässige Wand (28) an dem einen Ende derselben innerhalb der Packung (2) besitzt, und daß die Endbehälter (50) weiter durch eine Außenwand (52) am jeweiligen Ende der Packung (2) bestimmt sind zur Anlage der Mittel (10) zur sicheren Verbindung, wobei die Außenwand (52) eine Außenfläche besitzt, die eine Vielzahl von integralen einander überkreuzenden Rippen (48, 56) zur Verstärkung der Wand (52) gegen Verformung und zur Verteilung der Kräfte der Mittel (10) zur sicheren Befestigung im wesentlichen gleichmäßig über die Enden der Packung (2) enthält.

**Revendications**

1. Groupement (2) de batteries d'énergie motrice comprenant une série de bacs distincts en matière plastique pour des éléments galvaniques, fixés ensemble suivant un axe commun pour résister à une dilatation axiale, lesdits bacs étant chacun délimités par des parois d'extrémité planes parallèles (28) et logeant un couple d'éléments exothermiques, au moins l'une desdites parois étant attenante à une paroi juxtaposée d'un bac analogue adjacent dans le paquet, lesdites parois comportant des moyens d'espacement qui forment un intervalle d'aération et de refroidissement, caractérisé en ce que: (a) lesdites parois d'extrémité sont aptes à transmettre de la chaleur et ont une épaisseur insuffisante indépendamment pour résister à un gonflement dû aux forces développées par ledit couple dans ledit bac lors du cycle de charge et de décharge dudit paquet; (b) une série de bossages (32) venus de matière, aptes à transmettre la chaleur, sont répartis à peu près uniformément sur la surface externe (33) de ladite première paroi (28) pour former ledit intervalle (12) d'aération et de refroidissement entre les parois juxtaposées en butée, la dimension, le nombre et la proximité desdits bossages étant tels que lorsqu'ils sont en butée contre la paroi juxtaposée ou des bossages dudit bac adjacent, ils assurent entre-eux un support mutuel de façon à empêcher le gonflement des parois juxtaposées aussi bien qu'en maintenant l'intégrité dudit intervalle contre des forces engendrées lors dudit cycle; et (c) les bacs comportent des moyens de blocage mutuels coincidant pour empêcher un déplacement relatif desdits bacs.

2. Groupement (2) de batteries d'énergie motrice suivant la revendication 1, caractérisé en ce que les bossages (32) sur ladite première desdites parois juxtaposées (28) sont en butée contre des bossages (32) de l'autre desdites parois juxtaposées (28) dans ledit intervalle (12).

3. Groupement (2) de batteries d'énergie motrice suivant les revendications 1 ou 2, caractérisé en ce qu'il y a entre chaque paire de parois juxtaposées (28), une saillie mâle (36) sur l'une desdites parois juxtaposées (28) et une saillie complémentaire femelle (34) sur l'autre desdites parois juxtaposées (28); lesdites saillies mâles et femelles (36, 34) étant adaptées pour s'encastrer l'une dans l'autre pour empêcher le déplacement desdits bacs (4) l'un par rapport à l'autre tandis que lesdits bacs (4) sont fixés ensemble dans ledit.

4. Groupement (2) de batteries d'énergie motrice suivant la revendication 2 ou 3, caractérisé en ce qu'il y a entre chaque paire de parois juxtaposées (28) un premier jeu de saillies males et femelles (36, 34) sur l'une desdites parois juxtaposées (28) et une seconde série complémentaire de saillies males et femelles (36, 34) sur l'autre desdites parois juxtaposées (28); lesdites séries étant adaptées pour correspondre l'une avec l'autre de telle sorte que la saillie mâle (36) de chaque série s'encastre dans la saillie complémentaire femelle (34) de l'autre série et empêchent ensemble le déplacement desdits bacs (4) les uns par rapport aux autres dans toutes les directions radiales et en rotation par rapport audit axe (A) tandis que lesdits bacs (4) sont fixés ensemble dans ledit groupement (2).

5. Groupement (2) de batteries d'énergie motrice suivant la revendication 4, caractérisé en ce que lesdites saillies (36, 34) et bossages (32) pour chaque bac (4) sont disposés de telle sorte sur les parois correspondantes (28) que chaque bac (4) est interchangeable avec n'importe quel autre bac (4) de façon à pouvoir être positionné n'importe où dans ledit groupement (2) et en conservant toujours la butée bossage contre bossage et l'encastrement des saillies mâles dans les saillies femelles.

6. Groupement (2) de batteries d'énergie motrice suivant l'une quelconque des revendications précédentes 2 à 5, caractérisé en ce que le groupement (2) contient des bacs d'extrémité (50) aux extrémités opposées dudit groupement (2), lesdits bacs d'extrémité (50) logeant chacun un couple d'éléments galvaniques exothermiques et ayant ladite paroi (28) déformable apte à transmettre la chaleur à l'une de ses extrémités à l'intérieur du groupement (2), et lesdits bacs d'extrémité (50) étant en outre délimités chacun par une paroi externe (52) à l'extrémité du groupement (2) pour coopérer avec lesdits moyens (10) de fixation, ladite paroi externe (52) ayant une face externe comprenant une série de nervures (48, 56) venues de matière entrecroisées pour renforcer ladite paroi (52) contre une déformation et répartir la force desdits moyens (10) de fixation à peu près également en travers des extrémités du groupement (2).

Fig. 1

Fig. 2

Fig. 3

Fig.4

Fig.5

Fig.6

Fig.7

Fig.8